(19) Europäisches Patentamt
European Patent Office
Office européen des brevets

(11) **EP 2 994 699 B1**

(12) **EUROPÄISCHE PATENTSCHRIFT**

(45) Veröffentlichungstag und Bekanntmachung des Hinweises auf die Patenterteilung:
**13.02.2019 Patentblatt 2019/07**

(21) Anmeldenummer: **14747867.1**

(22) Anmeldetag: **21.07.2014**

(51) Int Cl.:
*F24D 10/00* *(2006.01)*    *F24D 11/00* *(2006.01)*
*F24D 11/02* *(2006.01)*

(86) Internationale Anmeldenummer:
**PCT/EP2014/065598**

(87) Internationale Veröffentlichungsnummer:
**WO 2015/014648 (05.02.2015 Gazette 2015/05)**

(54) **VERFAHREN UND ANORDNUNG ZUM BEREITSTELLEN VON WÄRME FÜR EINE FERNWÄRMEVERSORGUNG**

METHOD AND ARRANGEMENT FOR PROVIDING HEAT TO DISTRICT HEATING NETWORK

MÉTHODE ET AGENCEMENT POUR FOURNIR DE LA CHALEUR À UN RÉSEAU DE CHAUFFAGE À DISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2013 DE 102013214891**

(43) Veröffentlichungstag der Anmeldung:
**16.03.2016 Patentblatt 2016/11**

(73) Patentinhaber: **Siemens Aktiengesellschaft**
**80333 München (DE)**

(72) Erfinder:
• **LENK, Uwe**
**08064 Zwickau (DE)**
• **REISSNER, Florian**
**90475 Nürnberg (DE)**
• **SCHÄFER, Jochen**
**90408 Nürnberg (DE)**

(56) Entgegenhaltungen:
**EP-A2- 0 916 913        EP-A2- 1 371 910**
**WO-A1-2013/045361        DE-A1-102008 046 620**
**DE-U1- 29 912 994        DE-U1-202012 103 891**
**FR-A1- 2 298 768        FR-A1- 2 453 373**
**FR-A2- 2 287 582**

**Beschreibung**

Die vorliegende Erfindung betrifft ein Verfahren zum Bereitstellen von Wärme für eine Fernwärmeversorgung sowie die Anordnung eines Fernwärmenetzes mit einer Geothermiequelle.

Dokument FR 2 298 768 A1 beschreibt ein Verfahren zum Bereitstellen von Wärme für eine Fernwärmeversorgung, folgende Verfahrensschritte umfassend:

- Thermalwasserförderung zur Wärmebereitstellung auf einem ersten Temperaturniveau aus einer Geothermiequelle,
- Bereitstellen und Betreiben einer Wärmepumpe,
- Wärmetechnische Verschaltung der Geothermiequelle mit der Wärmepumpe,
- Leiten des Thermalwassers durch einen Wärmetauscher zur Wärmeübertragung auf ein Wärmetransportmedium, wodurch ein erwärmtes Wärmetransportmedium bereitgestellt wird,
- Zurückführen des in dem Wärmetauscher abgekühlten Thermalwassers über eine Reinjektionsleitung in die Geothermiequelle,
- Zuführen des erwärmten Wärmetransportmediums zu dem Verdampfer und dem Kondensator der Wärmepumpe,
- Wärmeübertragung von Wärme des ersten Temperaturniveaus von dem dem Verdampfer zugeführten erwärmten Wärmetransportmedium auf den Verdampfer der Wärmepumpe und- Bereitstellen von Wärme auf einem zweiten, höheren Temperaturniveau, durch den Kondensator der Wärmepumpe an das dem Kondensator zugeführte erwärmte Wärmetransportmedium.

Bisher basieren Fernwärmeversorgungen überwiegend auf der Verbrennung fossiler Energieträger. Die meisten der bestehenden Fernwärmenetze nutzen die Abwärme fossilbefeuerter Kraftwerke zur elektrischen Stromerzeugung. Mit der Kraft-Wärme-Kopplung (KWK) wird so der Energiegehalt des Brennstoffes weitgehend vollständig genutzt. Alternativ werden Fernwärmenetze bspw. an Müllverbrennungs-KWK-Kraftwerke angeschlossen.

Aus Umwelt- und Klimaschutzgründen, zur Verringerung des $CO_2$-Ausstoßes, wird aktuell und in Zukunft noch verstärkt die Verbrennung fossiler Energieträger verringert. Elektrischer Strom wird zunehmend als Primärenergie erzeugt, wie z. B. mittels Windkraftanlagen oder durch Photovoltaik. Dabei entsteht keine nutzbare Abwärme.

Da aktuell viele Fernwärmenetze bestehen, müssen diese auch weiterhin mit Wärme versorgt werden. Jedoch soll auch diese Wärme möglichst ausschließlich aus erneuerbaren Energien stammen. Bestehende Stadtfernwärmenetze weisen zum Teil über 800 km Fernwärmeleitungen auf und eine jährliche Heizleistung von 4 TWh. Verbraucher wie Privathaushalte, Gewerbe- und Industrieanlagen, sowie verschiedene öffentliche Abnehmer werden darüber mit Fernwärme versorgt. Im Jahr 2012 wurden noch etwa 90% der Fernwärme mittels Heizkraftwerken, die fossile Energieträger verbrennen, erzeugt.

Um bei der Wärmeerzeugung ebenso wie bei der elektrischen Stromerzeugung auf erneuerbare Energien umzustellen, müssen demnach bestehende Fernwärmenetze an neue, alternative Wärmequellen angeschlossen werden: Bisher geschieht dies beispielsweise über die Verbrennung von Biomasse, wobei einer der Nachteile davon darin liegt, dass die Kapazität der vorhandenen Biomasse sehr gering ist. Alternativ dazu gibt es den Einsatz elektrischer Widerstandsheizungen, deren Wirkungsgrad jedoch sehr gering ist.

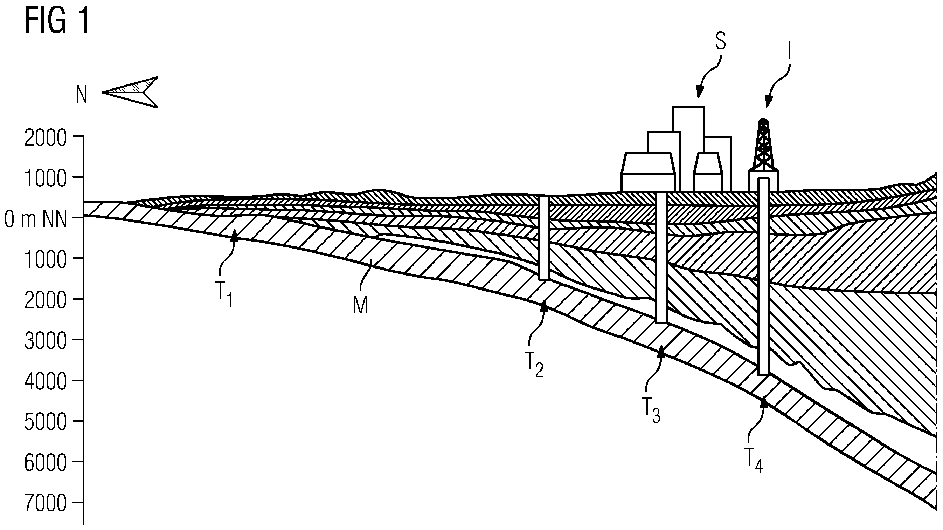

Eine weitere alternative Wärmequelle für Fernwärmenetze stellen Geothermiequellen dar. Je nach geographischen und geologischen Voraussetzungen jedoch werden selbst durch Tiefbohrungen keine Thermalwasserquellen erreicht, deren Temperatur für die Versorgung eines Fernwärmenetzes ausreichend wäre. In der Figur 1 ist z. B. ein Schnitt durch eine Region gezeigt, wie sie beispielsweise im deutschen Voralpenland vorkommen könnte. Die Thermalwasser führende Kalksteinschicht liegt dabei bis zu 4000 m unter der Erdoberfläche. In Tiefen zwischen 1000 m und 2000 m unter Normalnull können Thermalwassertemperaturen von etwa um die 65°C vorherrschen. Dies ist eine vollkommen ausreichende Temperatur beispielsweise für die stoffliche Nutzung des Thermalwassers in Thermalbädern. Für die thermische Nutzung jedoch müsste das Temperaturniveau höher sein. Die zusätzlich notwendige thermische Energie wird dabei bisher mittels einer sogenannten Zufeuerung zur Verfügung gestellt. Beispielsweise wird Wärme aus der Erdgasverbrennung genutzt, welche es jedoch zukünftig zu vermeiden gilt.

Folglich stellt es sich als ökologisch erforderlich dar, eine verbesserte Lösung vorzuschlagen, welche ohne $CO_2$-Ausstoß auskommt und rein auf erneuerbaren Energien beruht. Es stellt sich als wünschenswert heraus, für die Versorgung bestehender Fernwärmenetze überwiegend lokale geothermische Quellen nutzbar zu machen.

Diese der vorliegenden Erfindung zugrunde liegenden Aufgaben werden durch ein Verfahren gemäß Patentanspruch 1 sowie durch eine Anordnung gemäß Patentanspruch 9 gelöst. Vorteilhafte Ausgestaltungen der Erfindung sind Gegenstand der Unteransprüche.

Das erfindungsgemäße Verfahren zum Bereitstellen von Wärme für eine Fernwärmeversorgung umfasst die Verfahrensschritte gemäß Anspruch 1.

Dieses Verfahren eine Fernwärmeversorgung mit einer Geothermiequelle zu kombinieren und über eine Hochtemperaturwärmepumpe geeignet zu verschalten hat den Vorteil, eine entkarbonisierte Wärmeversorgung zu gewährleisten. Die Geothermiequelle wird also als Wärmequelle für den Verdampfer der Wärmepumpe genutzt. Im Kondensator der Wärmepumpe kann dann Wärme auf einem höheren Temperaturniveau für die Versorgung von Wärmeverbrauchern in einem Fernwärmenetz bereitgestellt werden. Wärmeverbraucher können beispielsweise Städte oder Stadtbezirke sein, welche neben öffentlichen Abnehmern überwiegend Wohnbebauung und private Verbraucher umfassen können, sowie auch Industrieabnehmer.

Das erfindungsgemäße Verfahren gewährleistet sozusagen eine Aufwertung der Wärme einer Geothermiequelle.

Vorzugsweise wird bei dem Verfahren als Hochtemperaturwärmepumpe eine Hochtemperaturkompressionswärmepumpe eingesetzt. Diese benötigt neben der Wärmequelle für den Verdampfer lediglich eine elektrische Energiequelle zum Betreiben des Kompressors. Dies geschieht vorzugsweise mittels elektrischem Strom aus regenerativen Energien, beispielsweise mittels elektrischem Strom aus einer Photovoltaik- oder aus einer Windkraftanlage.

Häufig weisen Geothermiequellen je nach Standort und Bohrtiefe keine ausreichend hohen Temperaturen für eine Fernwärmeversorgung auf. Gerade in der Nähe von Städten oder direkt im Stadtgebiet, wo ein Großteil der Verbraucher sitzt, kann nicht auf beliebig weit entfernte Quellen und auch nicht auf beliebig tiefe Bohrungen je nach geologischem Standort ausgewichen werden. Häufig liegen die zur Verfügung stehenden Geothermiequellen mit ihrer Wärme auf einem Temperaturniveau zwischen 60°C und 95°C, was in den Sommermonaten vielleicht für eine Fernwärmeversorgung ausreichen könnte, jedoch gerade im Winterhalbjahr in den gemäßigten Breiten nicht ausreicht. Dann sind Fernwärmevorlauftemperaturen von mindestens 100°C, in der Regel vorzugsweise von um die 130°C notwendig.

Das zweite höhere Temperaturniveau liegt bei mindestens 100°C, insbesondere bei mindestens 110°C. Beispielsweise kann das zweite, höhere Temperaturniveau bei mindestens 120°C oder vorzugsweise bei mindestens 130°C liegen.

In einer vorteilhaften Ausgestaltung der Erfindung werden bei dem Verfahren in der Hochtemperaturwärmepumpe Arbeitsmittel aus der Familie der Fluorketone eingesetzt. Vorzugsweise werden ausschließlich nicht-toxische Arbeitsmittel eingesetzt, insbesondere umweltfreundliche, sichere Arbeitsmittel. Vorzugsweise wird in der Hochtemperaturwärmepumpe ein Arbeitsmittel eingesetzt, dessen kritische Temperatur über 140°C liegt, insbesondere über 150°C und vorzugsweise über 160°C. Gerade umweltfreundliche, nicht-toxische und sichere Arbeitsmedien zeichnen sich häufig durch sehr spezielle thermodynamische Eigenschaften wie beispielsweise eine hohe kritische Temperatur aus. Die hohe kritische Temperatur des eingesetzten Arbeitsmediums hat den Vorteil, dass ein subkritischer Wärmepumpenprozess gefahren werden kann und eine annähernd isotherme Wärmeabgabe erfolgen kann.

Gemäß der Erfindung ist vorgesehen, dass das Thermalwasser zunächst durch einen ersten Wärmetauscher geleitet wird und das abgekühlte Thermalwasser über eine Reinjektionsleitung der Gesteinsschicht wieder zugeführt wird. An den ersten Wärmetauscher schließt sich ein Wärmetransportkreislauf an, in dem ein Wärmetransportmedium, vorzugsweise Wasser, die Wärme transportiert. Von diesem Wärmetauscher wird über zwei Leitungen Wärme auf einem Temperaturniveau, das nur wenig unterhalb der Temperatur der Geothermiequelle liegt, zum einen dem Verdampfer und zum anderen dem Kondensator der Hochtemperaturwärmepumpe zugeführt. Mittels der Hochtemperaturwärmepumpe wird das Wärmetransportmedium auf die erforderliche Vorlauftemperatur für das Fernwärmenetz gebracht. Beispielsweise können der Fernwärmerücklauf sowie der Rücklauf vom Verdampfer der Wärmepumpe wieder zusammengeführt und gemischt werden, bevor das Wärmetransportmittel den ersten Wärmetauscher wieder erreicht. Die Rücklauftemperaturen von Wärmetransportmittel zu Fernwärmenetzen liegen üblicherweise bei 45°C oder darunter. Die Rücklauftemperatur nach dem Verdampfer liegt wesentlich höher, je nach Temperatur der Geothermiequelle, und kann somit bei der Mischung mit dem Fernwärmerücklauf schon für eine erhöhte Mischtemperatur sorgen bevor das Wärmetransportmittel über den ersten Wärmetauscher wieder Wärme der Geothermiequelle aufnimmt.

Gemäß einer weiteren besonders bevorzugten Ausführungsform der Erfindung ist vorgesehen, in dem Verfahren wenigstens einen thermischen Speicher zur Aufnahme und Speicherung der Wärme des ersten Temperaturniveaus vom Thermalwasser oder der Wärme des zweiten, höheren Temperaturniveaus vom Kondensator der Hochtemperaturwärmepumpe einzusetzen. Dazu wird wenigstens ein thermischer Speicher mit dem ersten Wärmetauscher an der Geothermiequelle oder nach dem Kondensator der Wärmepumpe angeordnet, so dass jeweils die Wärmepumpe auf den thermischen Speicher des Geothermiequellentemperaturniveaus oder das Fernwärmenetz auf den thermischen Speicher des Wärmepumpenausgangstemperaturniveaus zugreifen können. Dieses Verfahren hat den Vorteil, Strom- und Wärmebedarf bzw. Strom- und Wärmebereitstellung zeitlich zu entkoppeln. Zum einen kann bei einem Stromüberangebot im Netz, wie es durch den vermehrten Einsatz regenerativer Energien vorkommt, dieses genutzt werden um den Wärmespeicher auf dem zweiten, höheren Temperaturniveau zu laden: Power-to-Heat-Prinzip. Alternativ kann bei erhöhtem Strombedarf auf den Betrieb der Wärmepumpe für einen gewissen Zeitraum verzichtet werden, in dem das Fernwärmenetz auf den Speicher zugreift. Für diesen Zeitraum wird dann die Wärme, die der Geothermiequelle entstammt, in einem weiteren Wärmespeicher vorgehalten, auf den die Wärmepumpe zu einem späteren Zeitpunkt zurückgreifen kann (Demand Side Management).

An Standorten, an denen z.B. aufgrund der geographischen Bedingungen nur sehr niedrige Thermalwassertemperaturen vorherrschen, kann beispielsweise eine Kopplung von zwei Wärmepumpen zur Aufwertung der Geothermiewärmequelle vorgenommen werden. Die Wärmepumpen werden bevorzugt in einer Reihenschaltung kombiniert, um so ausreichend hohe Temperaturen zu erzeugen.

Die erfindungsgemäße Anordnung zur Bereitstellung von Wärme für ein Fernwärmenetz auf einem Temperaturniveau von mindestens 100°C umfasst die Merkmale von Anspruch 9. Typischerweise ist die Hochtemperaturwärmepumpe eine Hochtemperaturkompressionswärmepumpe.

Bevorzugt umfasst die Hochtemperaturwärmepumpe ein Arbeitsmittel, welches aus der Familie der Fluorketone ist. Typischerweise weist das Arbeitsmittel in der Hochtemperaturwärmepumpe eine kritische Temperatur über 140°C, insbesondere über 150°C und bevorzugt über 160°C auf. Bevorzugt werden umweltfreundliche, nicht-toxische und sichere Arbeitsmittel von der Hochtemperaturwärmepumpe umfasst.

Der Kompressor der Hochtemperaturwärmepumpe wird typischerweise mit elektrischer Energie aus regenerativen Energiequellen, beispielsweise einer Photovoltaikanlage oder einer Windkraftanlage betrieben.

In einer besonders bevorzugten Ausgestaltung der Erfindung umfasst die Anordnung zur Bereitstellung von Wärme für ein Fernwärmenetz wenigstens einen thermischen Speicher, der zur Aufnahme und Speicherung von Wärme eines ersten Temperaturniveaus vom Thermalwasser oder von Wärme eines zweiten, höheren Temperaturniveaus vom Kondensator der Hochtemperaturwärmepumpe ausgestaltet ist. Vorzugsweise sind ein erster thermischer Speicher zur Aufnahme und Speicherung von Wärme des ersten Temperaturniveaus vom Thermalwasser und ein zweiter thermischer Speicher zur Aufnahme und Speicherung von Wärme eines zweiten, höheren Temperaturniveaus vom Kondensator der Hochtemperaturwärmepumpe umfasst. Der erste thermische Speicher ist dazu bevorzugt zwischen Geothermiequelle und Wärmepumpe angeordnet, so dass der Verdampfer der Wärmepumpe auf diesen ersten thermischen Speicher zugreifen kann. Der zweite thermische Speicher ist typischerweise zwischen Kondensator der Hochtemperaturwärmepumpe und Fernwärmenetz bzw. den Fernwärmeverbrauchern angeordnet, so dass dieser mit Wärme vom Kondensator der Hochtemperaturwärmepumpe beladen werden kann und das Fernwärmenetz aus diesem gespeist werden kann.

In einer weiteren vorteilhaften Ausgestaltung der Erfindung umfasst die Anordnung mindestens zwei Hochtemperaturwärmepumpen in einer Reihenschaltung, d.h. dass diese so nacheinander gekoppelt sind, dass auch Wärme aus Thermalwasserquellen sehr niedriger Temperatur soweit aufgewertet werde kann, dass ein Temperaturniveau, das für die Fernwärmeversorgung geeignet ist, erreicht wird.

Ausführungsformen der vorliegenden Erfindung werden in exemplarischer Weise mit Bezug auf die Figuren 1 bis 9 der angehängten Zeichnung beschrieben:

Figur 1    zeigt einen Nord-Süd-Schnitt durch eine Beispielregion

Figur 2    zeigt ein Verfahrensschema eines Geothermie-Heizwerks mit Absorptionswärmepumpe

Figur 3    zeigt ein Verfahrensschema einer Absorptionswärmepumpe

Figur 4    zeigt ein Verfahrensschema zur Temperaturanhebung mit Kompressionswärmepumpe

Figur 5    zeigt ein Verfahrensschema zur Temperaturanhebung mit Kompressionswärmepumpe und thermischen Pufferspeichern

Figur 6    zeigt ein COP-Temperatur-Diagramm der Hochtemperaturwärmepumpe (Coefficient Of Performance, Leistungszahl)

Figur 7    zeigt ein COP-Temperatur-Diagramm zur Potentialabschätzung im Megawatt-Leistungsbereich

Figur 8    zeigt ein Temperatur-Entropie-Diagramm eines transkritischen Wärmepumpenprozesses

Figur 9    zeigt ein Temperatur-Entropie-Diagramm eines subkritischen Wärmepumpenprozesses.

In der Figur 1, ist wie bereits einleitend erwähnt, ein Nord-Süd-Schnitt durch eine Bodenregion gezeigt, wie sie beispielsweise im deutschen Voralpenland vorkommt. Dabei fällt die Thermalwasser führende Kalksteinschicht M von Norden nach Süden ab, so dass diese im Süden nur durch immer tiefer werdende Bohrungen erreicht werden kann. Während die Thermalwassertemperatur $T_1$ in der nördlichen Region etwa um die 35°C beträgt, erreicht die Temperatur $T_4$ im Süden und dementsprechend bei sehr viel tieferliegenderer Kalksteinschicht M etwa 140°C. Dazwischen, bei Bohrungen in Tiefen zwischen 1000 m und 3000 m unter Normallnull, sind Thermalwassertemperaturen $T_{2/3}$ von etwa 65°C bis zu 100°C vorzufinden. Soll für die neue Fernwärmeversorgung 40 nun die Erdwärme nutzbar gemacht werden, verdeutlicht dieser Querschnitt die Problematik, dass ohne zusätzliches Anheben des Temperaturniveaus keine für die Fernwärme nutzbare Temperatur erreicht wird. Typischerweise liegt die Temperatur $T_7$ eines Fernwärmevorlaufs 27 zwischen 70°C und 110°C, je nach Jahreszeit aber auch deutlich höher. Im Winter beträgt die Temperatur $T_7$ des Fernwärmevorlaufs 27 vorzugsweise zwischen 90°C und 180°C. In der Regel ist eine Temperatur $T_7$ des Fernwärmevorlaufs 27 von um die 130°C ausreichend.

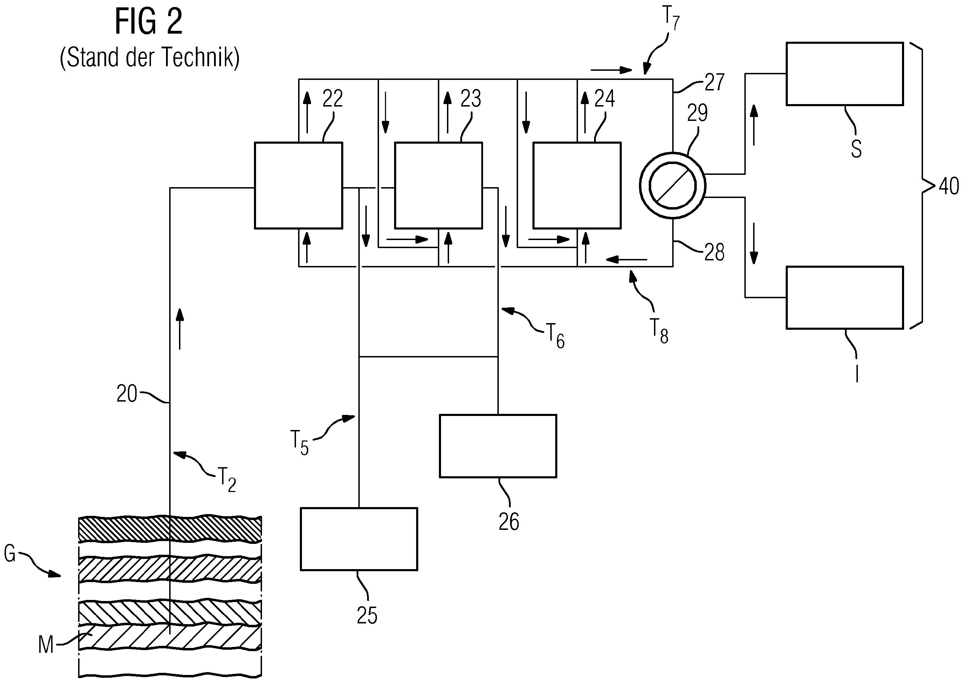

In der Figur 2 ist ein aus dem Stand der Technik bekanntes Verfahrensschema zur Nutzung von Erdwärme in einem Fernwärmenetz 40 gezeigt. Das Thermalwasser wird über eine Thermalwasserleitung 20 aus einer Gesteinstiefe von beispielsweise 2300 m gefördert und hat eine Temperatur $T_2$ von etwa um die 65°C. Das Thermalwasser wird dann beispielsweise einem Wärmetauscher 22 zugeführt, welcher einen Teil des Thermalwassers mit einer Temperatur $T_2$ von um die 65°C direkt weiter in Richtung Fernwärmevorlauf 27 fördert und einen abgekühlten Teil des Thermalwasser auf ein Temperaturniveau $T_5$ von etwa 40°C bis 45°C einem Thermalbad 25 zur Verfügung stellt. Dies ist eine bekannte sehr beliebte stoffliche Nutzung der Thermalquelle. Derart eingesetzte Wärmetauscher 22 liegen in einem Leistungsbereich von beispielsweise um die 2 MW. Der Wärmetauscher 22 weist des Weiteren fluidtechnische Verbindungen mit einer Wärmepumpe 23 auf, wobei im Stand der Technik bisher nur der Einsatz von Absorptionswärmepumpen 23 bekannt ist. Diese arbeiten beispielsweise in einem Leistungsbereich von um die 7 MW. Eine Absorptionswärmepumpe 23 stellt in diesem Fall eine Nachheizlösung dar. Alternativ werden zur Zufeuerung beispielsweise die Verbrennung von Biomasse oder Erdgas oder eine elektrische Nachheizung verwendet. Die Wärmepumpe 23 weist einen Ablauf zum Fernwärmevorlauf 27, sowie einen Ablauf mit sehr stark abgekühltem Wasser zu einem Verbraucher 26 auf. Das abgekühlte Wasser hat eine Temperatur $T_6$ von beispielsweise um die 20°C und wird der stofflichen Nutzung, also der Nutzung als Trinkwasserversorgung zum Beispiel für Haushalte zugeführt. Diese Ableitung zum Verbraucher 26 kann beispielsweise eine fluidtechnische Verbindung mit der Leitung zum Thermalbad 25 aufweisen. Außerdem weist die Wärmepumpe 23 einen Zulauf für kaltes Wasser auf, welcher beispielsweise aus dem Fernwärmerücklauf 28 mit versorgt wird. Des Weiteren ist in dem Verfahrensschema in Figur 2 ein Brennkessel 24 für Erdgas gezeigt, welcher beispielsweise im Bereich von 10 MW arbeitet und Spitzenlasten ausgleichen kann und somit eine weitere notwendige Komponente zur Temperaturerhöhung des Fernwärmevorlaufs 27 darstellt. Die Temperatur $T_7$ des so realisierten Fernwärmevorlaufs 27 beträgt dabei zwischen 70°C und 110°C. Die für den Winterbetrieb in den meisten Fernwärmenetzen 40 notwendige Temperatur von 130°C kann mit dieser Art Geothermie-Heizwerk nicht bewerkstelligt werden. Nach dem Wärmeabnehmer 29 sind Zuleitungen zu Wärmeverbrauchern 40 wie beispielsweise einer Stadt S mit Wohnbebauung und verschiedenen öffentlichen Abnehmern sowie alternativ zu Industrieabnehmern I gezeigt. Der Fernwärmerücklauf 28 hat ein Temperaturniveau $T_9$ von in der Regel zwischen 40°C und 45°C.

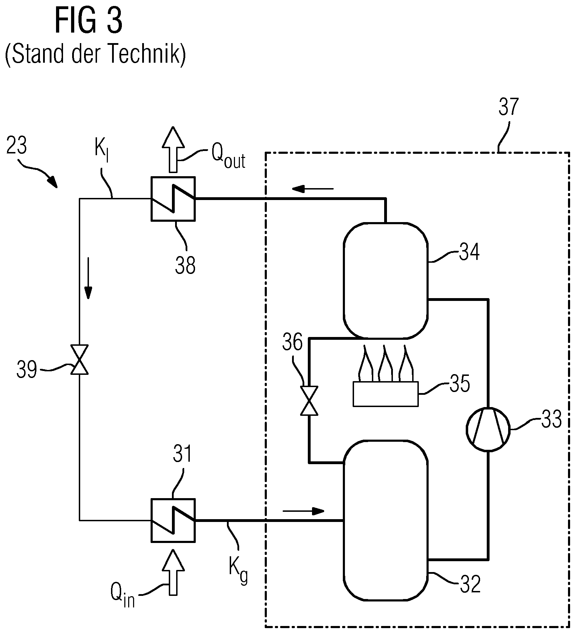

In der Figur 3 ist ergänzend dazu noch im Detail das Verfahrensschema einer beispielsweise in Figur 2 eingesetzten Absorptionswärmepumpe 23 gezeigt. Bei dieser erfolgt die Wärmezufuhr $Q_{in}$ an einen Verdampfer 31 und die Wärmeabgabe $Q_{out}$ erfolgt am Verflüssiger 38 der Absorptionswärmepumpe 23. Mit Pfeilen ist der Kältemittelkreislauf gekennzeichnet. Auf der linken Seite des Kreislaufs ist das Kältemittel $K_l$ flüssig und nach dem Verdampfer 31 liegt das Kältemittel $K_g$ dampfförmig vor. So erreicht es den thermischen Verdichter 37. In diesem durchläuft das dampfförmige Kältemittel $K_g$ zunächst den Absorber 32 und wird dann über eine Pumpe 33 weiter zum Austreiber 34 befördert. Die Rückverbindung zwischen Austreiber 34 und Absorber 32 weist ein Druckreduzierventil 36 auf. Der Austreiber 34 wird mittels Erdgasverbrennung erwärmt, so dass das Kältemittel $K_g$ den Austreiber 34 wieder in dampfförmiger Form verlässt. Nach dem thermischen Verdichter 37 erreicht das Kältemittel $K_g$ den Verflüssiger 38, an dem die Wärmeabgabe $Q_{out}$ erfolgt. Die Rückverbindung zwischen Verflüssiger 38 und Verdampfer 31 weist wiederum ein Druckreduzierventil 39 auf. Bisher bekannte Wärmepumpenanlagen 23 dieser Art sowie auch bisher bekannte Kompressionswärmepumpen aus dem Stand der Technik sind derzeit nicht in der Lage, Temperaturen über 90°C zuverlässig zu erreichen. Einzelne Prototypen erreichen bis zu 100°C, sind aber nicht kommerziell verfügbar und basieren auf transkritischen Prozessen. Der Großteil der eingesetzten Wärmepumpen liefert Temperaturen im Niedertemperaturbereich von etwa 55°C bis 60°C und im Hochtemperaturbereich von etwa 70°C bis 75°C.

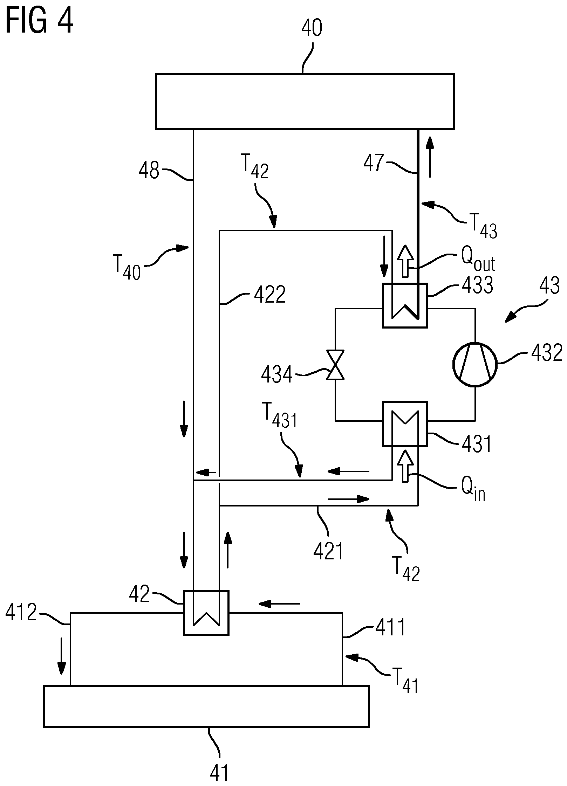

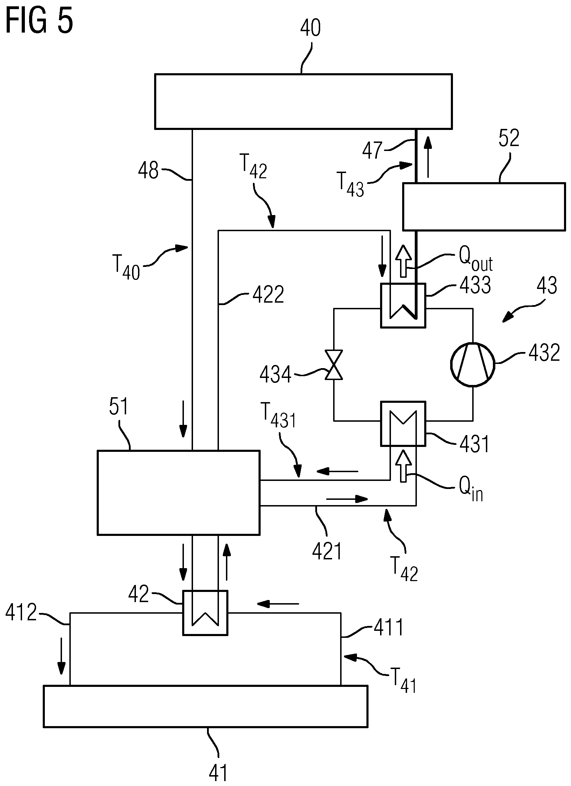

In den Figuren 4 und 5 ist das Konzept zur Temperaturanhebung einer Geothermiequelle 41 mittels einer Kompressionswärmepumpe 43 gezeigt. Die Wärmepumpe 43 fungiert dabei jeweils als Bindeglied zwischen der Geothermiequelle 41 und dem Fernwärmenetz 40. Die Wärmepumpe 43 ist dazu mit beiden thermisch gekoppelt: Das geförderte Thermalwasser aus der Geothermiequelle 41 hat beispielsweise eine Temperatur $T_{41}$ von 93°C. Das geförderte Thermalwasser wird über eine Thermalwassertransportleitung 411 einem Wärmetauscher 42 zugeführt. Der Ablauf des Wärmetauschers 42 ist als Reinjektionsleitung 412 ausgeführt und bringt das abgekühlte Wasser zurück in die tiefen Gesteinsschichten G. Über den Wärmetauscher 42 wird ein weiterer Kreislauf mit Wärme des Thermalwassers versorgt. Ein Wärmetransportmedium, insbesondere Wasser, wird durch eine erste Zuleitung 421 zum Verdampfer 431 der Hochtemperaturwärmepumpe 43 und über eine zweite Zuleitung 422 zum Kondensator 433 der Hochtemperaturwärmepumpe 43 geleitet.

Der Ablauf vom Verdampfer 431 führt dann Wasser mit einer bereits verminderten Temperatur $T_{431}$ von bspw. ca. 80°C. Die Temperatur $T_{42}$ des Vorlaufs zum Verdampfer 431 beträgt bspw. ca. 90°C. Der Rücklauf vom Verdampfer 431 wird insbesondere mit dem Rücklauf 48 des Fernwärmenetzes 40 zusammengeführt. Die Rücklauftemperatur $T_{40}$ des Fernwärmenetzes 40 beträgt dabei maximal um die 45°C. Der zusammengeführte Rücklauf erreicht dann wieder den Wärmetauscher 42.

Über den Verdampfer 431 wird die Wärme $Q_{in}$, die von der Geothermiequelle 41 zur Verfügung gestellt wird, an die Wärmepumpe 43 weitergegeben. Diese umfasst neben dem Verdampfer 431 und dem Kondensator 433 einen Kompressor 432 sowie ein Expansionsventil 434. Durch den Einsatz besonders geeigneter Arbeitsmedien in der Hochtemperaturwärmepumpe 43 ist es möglich, am Kondensator 433 Wärme $Q_{out}$ auf einem Temperaturniveau $T_{43}$ von um die 130°C abzugeben, welche über einen Fernwärmenetzkreislauf 40 verschiedenen Verbrauchern zur Verfügung gestellt werden kann.

Der Kompressor 432 der Hochtemperaturwärmepumpe 43 wird mit elektrischem Strom betrieben, welcher erfindungsgemäß aus regenerativen Energiequellen gewonnen wurde. Somit ist die Gesamtanordnung aus Geothermiequelle 41 bzw. Thermalwasserförderung 411, Hochtemperaturwärmepumpe 43 und Fernwärmenetz 40 sozusagen entkarbonisiert und gewährleistet eine zuverlässige Wärmeversorgung eines Fernwärmenetzes 40 mittels Erdwärme.

In dem Verfahrensschema in Figur 5 sind dem Konzept, wie es in Figur 4 dargestellt ist, noch thermische Speicher 51, 52 hinzugefügt. Ein erster thermischer Speicher 51 dient als Puffer zwischen Geothermiequelle 41 und der Anordnung des Fernwärmenetzes 40 mit der Wärmepumpe 43. In diesem ersten thermischen Speicher 51 wird Wärme auf einem Temperaturniveau $T_{41}$ von etwa 90°C gespeichert und kann bei Bedarf an die Hochtemperaturwärmepumpe 43 abgegeben werden.

Ein zweiter thermischer Speicher 52 ist zwischen Hochtemperaturwärmepumpe 43 und Fernwärmenetz 40 angeordnet und so ausgestaltet, dass Wärme auf einem Temperaturniveau $T_{43}$ von ca. 130°C zwischengespeichert werden kann und bei Bedarf an den Fernwärmevorlauf 47 abgegeben wird. Diese Möglichkeiten zur Wärmespeicherung ermöglichen eine zeitliche Entkopplung des Strom- bzw. Wärmebedarfs des Kunden und der möglichen Bereitstellung der Wärme. Wird also aus dem Fernwärmenetz 40 vermindert Wärme abgefragt, kann diese zunächst in dem zweiten Speicher 52 zwischengespeichert werden ohne verloren zu gehen. Darüber hinaus bietet dies eine Option zur Bereitstellung einer negativen Regelleistung (Power to Heat): So kann ein Beitrag zum Ausgleich einer fluktuierenden Stromproduktion geleistet werden. Es besteht insbesondere die Möglichkeit zur Aufnahme von regenerativ produzierter Überschussleistung aus dem Stromnetz bei vermehrtem Einsatz regenerativer Stromquellen wie Windkraftanlagen oder Photovoltaik. Der Leistungsüberschuss kann so schnell, sicher und kostengünstig kompensiert werden und steht dem Fernwärmenetz 40 in Form von Wärme aus dem Energiespeicher 52 zu einem beliebigen späteren Zeitpunkt zur Verfügung.

Ebenso kann für einen begrenzten Zeitraum auf einen Strombezug aus dem Netz zum Antrieb der Wärmepumpe 43 verzichtet werden, um zunächst den Speicher 52 zu leeren (Demand Side Management). So kann also die Wärmeversorgung zeitlich entkoppelt vom Betrieb der Wärmepumpe 43 sichergestellt werden. In dem Zeitraum, in dem die Wärmepumpe 43 nicht betrieben wird, kann die Wärme der Geothermiequelle 41 in dem ersten thermischen Speicher 51 vorgehalten werden.

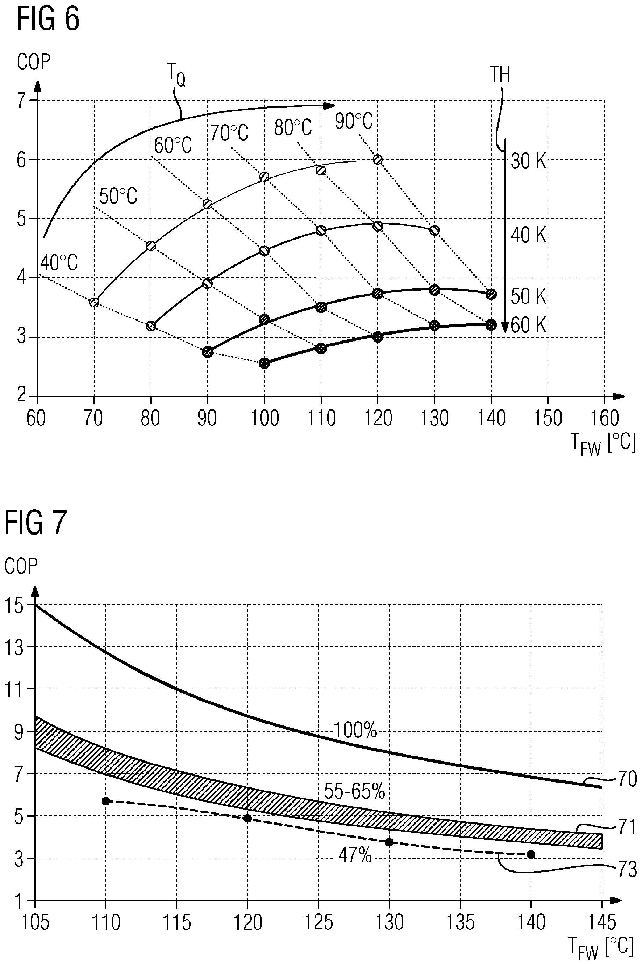

In den Figuren 6 und 7 sind COP-T-Diagramme gezeigt. COP steht dabei für Coefficient of Performance und ist die Leistungszahl der Wärmepumpe 43, welche die Wärmeleistung pro elektrischer Antriebsleistung darstellt:

$$\mathrm{COP} = \frac{W\ddot{a}rmeleistung}{elektrische\ Antriebsleistung}$$

Die im Diagramm aufgetragene Temperatur $T_{FW}$ ist die Temperatur der Wärmeabgabe der Wärmepumpe 43 an das Fernwärmenetz 40. Eingetragen sind Messwerte einer Hochtemperaturkompressionswärmepumpe 43, die mit einem Arbeitsmedium wie beispielsweise Novec649 (Dodecafluoro-2-methylpentan-3-one) betrieben wird. Die Temperatur $T_Q$ der Wärmequelle, bzw. die Verdampfungstemperatur wurde dazu zwischen 40°C und 90°C variiert. In Abhängigkeit von der Kompressorleistung der Hochtemperaturkompressionswärmepumpe 43 wurden unterschiedliche Temperaturhübe TH zwischen 30 K und 60 K realisiert. Mit zunehmendem Temperaturhub TH sinkt die Leistungszahl COP der Wärmepumpe 43. Bei einem Temperaturhub TH von 50 K etwa kann jedoch mit der Hochtemperaturkompressionswärmepumpe 43 Wärme auf einem Temperaturniveau $T_{43}$ von 130°C, wie sie für die Fernwärmeversorgung 40 notwendig ist, bei einer Leistungszahl COP von etwa 3,8 gewährleistet werden.

In der Figur 7 ist eine Potentialabschätzung für Hochtemperaturwärmepumpenanlagen 43 im Megawatt-Bereich gezeigt: Die vorliegenden Messwerte 73 mit Novec649 beziehen sich auf einen Demonstrator mit nur 10 kW thermischer Leistung. Alternativ kann auch Novec524 (Decafluoro-3-methylbutan-2-one) als Arbeitsmittel eingesetzt werden. Auch ist in dem Diagramm der Figur 7 die thermodynamische Grenze 70 nach dem Carnot-Wirkungsgrad eingezeichnet. Die Erwartungswerte 71 für Anlagen im Megawatt-Leistungsbereich liegen bei 55% bis 65% des Carnot-Wirkungsgrades 70. Die Abschätzungen 71 beruhen auf Hochrechnungen wie sie erfahrungsgemäß durch höhere Wirkungsgrade bei großen Anlagen mit größerem Volumen und geringeren Wärmeverlusten, sowie größeren Kompressoren zu erwarten sind. Die Effizienz, also die Leistungszahl COP sinkt mit zunehmender Temperatur $T_{FW}$ der Wärmeabgabe, bzw. der Kondensationstemperatur der Wärmepumpe. Die in Figur 7 gezeigten Werte gelten für eine Wärmequelletemperatur von 80°C.

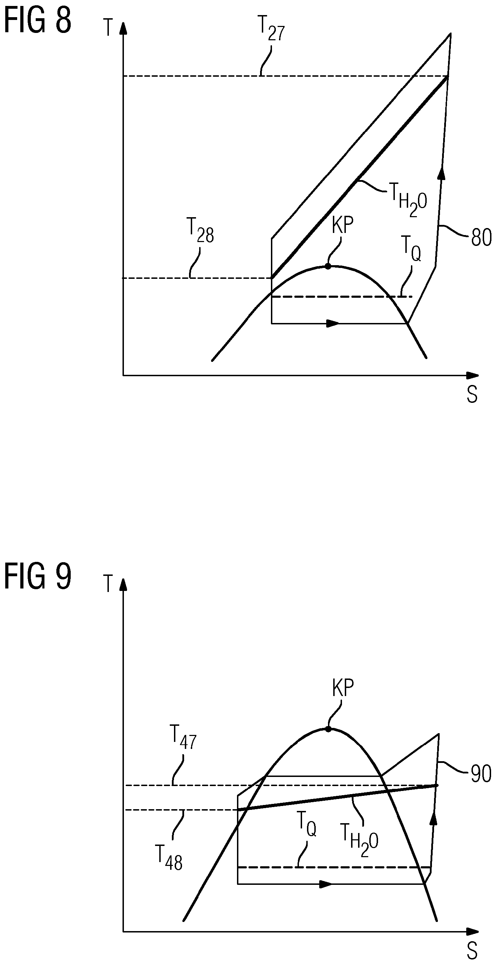

In den Figuren 8 und 9 sind zwei Temperatur-Entropie-Diagramme gezeigt. Diese sollen den Unterschied zwischen einem transkritischen Wärmepumpenprozess 80, wie er häufig im Stand der Technik vorkommt, wie eben gerade bei einer bekannten Wärmepumpe, die nur bis zu 90°C Wärmeabgabe erreicht und einem subkritischen WP-Prozess 90 verdeutlichen. Durch den transkritischen Prozess 80 kann die Abgabe von Wärme $Q_{out}$ auf dem erreichten Temperaturniveau

$T_7$ nicht konstant aufrecht erhalten werden. In den Diagrammen ist ein Abschnitt der Phasengrenze des jeweiligen Arbeitsmediums mit seinem kritischen Punkt KP eingezeichnet, sowie der Wärmepumpenprozess 80, 90. Bei dem gezeigten transkritischen Wärmepumpenprozess 80 liegt die erreichbare Temperatur $T_7$, die an den Fernwärmevorlauf 27 abgegeben werden kann, weit über dem kritischen Punkt KP.

Im Falle der erfindungsgemäß eingesetzten Hochtemperaturkompressionswärmepumpe 43 liegt die Vorlauftemperatur $T_{43}$, also die maximal erreichbare Heißwassertemperatur $T_{H20}$ für die Fernwärmeversorgung 40 deutlich unter dem kritischen Punkt KP des Arbeitsmediums, da vorzugsweise Arbeitsmittel mit sehr hohen kritischen Temperaturen eingesetzt werden. Demnach ist der Wärmepumpenprozess 90 im subkritischen Bereich, womit eine annähernd isotherme Wärmeabgabe auf diesem hohen Temperaturniveau $T_{43}$ von beispielsweise um 130°C gewährleistet ist.

**Patentansprüche**

1. Verfahren zum Bereitstellen von Wärme ($Q_{out}$) für eine Fernwärmeversorgung (40), folgende Verfahrensschritte umfassend:

   - Thermalwasserförderung (20) zur Wärmebereitstellung auf einem ersten Temperaturniveau ($T_{41}$, $T_{42}$) aus einer Geothermiequelle (41),
   - Bereitstellen und Betreiben einer Hochtemperaturwärmepumpe (43),
   - Wärmetechnische Verschaltung der Geothermiequelle (41) mit der Hochtemperaturwärmepumpe (43),
   - Leiten des Thermalwassers durch einen Wärmetauscher (42) zur Wärmeübertragung auf ein Wärmetransportmedium, wodurch ein erwärmtes Wärmetransportmedium bereitgestellt wird,
   - Zurückführen des in dem Wärmetauscher (42) abgekühlten Thermalwassers über eine Reinjektionsleitung (412) in die Geothermiequelle (41),
   - Zuführen des erwärmten Wärmetransportmediums zu dem Verdampfer (431) und dem Kondensator (433) der Hochtemperaturwärmepumpe (43), wobei das Wärmetransportmedium dem Verdampfer (431) und dem Kondensator (433) auf dem gleichen Temperaturniveau ($T_{42}$) zugeführt wird,
   - Wärmeübertragung von Wärme ($Q_{in}$) des ersten Temperaturniveaus ($T_{41}$, $T_{42}$) von dem dem Verdampfer (431) zugeführten erwärmten Wärmetransportmedium auf den Verdampfer (431) der Hochtemperaturwärmepumpe (43) und
   - Bereitstellen von Wärme ($Q_{out}$) auf einem zweiten, höheren Temperaturniveau ($T_{43}$, $T_{47}$), das bei mindestens 100°C liegt, durch den Kondensator (433) der Hochtemperaturwärmepumpe (43) an das dem Kondensator (433) zugeführte erwärmte Wärmetransportmedium.

2. Verfahren nach Anspruch 1, bei dem als Hochtemperaturwärmepumpe (43) eine Hochtemperaturkompressionswärmepumpe (43) eingesetzt wird.

3. Verfahren nach Anspruch 1 oder 2, bei dem das zweite, höhere Temperaturniveau ($T_{43}$, $T_{47}$) bei mindestens 110°C liegt.

4. Verfahren nach einem der vorstehenden Ansprüche, bei dem in der Hochtemperaturwärmepumpe (43) ein Arbeitsmittel aus der Familie der Fluorketone eingesetzt wird.

5. Verfahren nach einem der vorstehenden Ansprüche, bei dem in der Hochtemperaturwärmepumpe (43) ein nicht toxisches Arbeitsmittel eingesetzt wird.

6. Verfahren nach einem der vorstehenden Ansprüche, bei dem in der Hochtemperaturwärmepumpe (43) ein Arbeitsmittel eingesetzt wird, dessen kritische Temperatur über 160°C liegt.

7. Verfahren nach einem der vorstehenden Ansprüche, bei dem wenigstens ein thermischer Speicher (51, 52) zur Aufnahme und Speicherung der Wärme ($Q_{in}$) des ersten Temperaturniveaus ($T_{41}$, $T_{42}$) vom Thermalwasser oder der Wärme ($Q_{out}$) des zweiten, höheren Temperaturniveaus ($T_{43}$, $T_{47}$) vom Kondensator (433) der Hochtemperaturwärmepumpe (43) eingesetzt wird.

8. Verfahren nach einem der vorstehenden Ansprüche, bei dem mindestens zwei Hochtemperaturwärmepumpen (43) in einer Reihenschaltung gekoppelt werden.

9. Anordnung zur Bereitstellung von Wärme ($Q_{out}$) für ein Fernwärmenetz (40) auf einem Temperaturniveau ($T_{43}$, $T_{47}$) von mindestens 100°C umfassend wenigstens eine Thermalwasserfördereinrichtung (20), eine Hochtemperaturwärmepumpe (43) mit einem Verdampfer (431) und einem Kondensator (433), einen Wärmetauscher (42) zur Übertragung von Wärme von dem geförderten Thermalwasser zu einem Wärmetransportmedium zur Bereitstellung eines erwärmten Wärmetransportmediums, eine Thermalwassertransportleitung (411) zur Zuführung des geförderten Thermalwassers zu dem Wärmetauscher (42) eine Reinjektionsleitung (412) zur Rückführung des in dem Wärmetauscher (42) abgekühlten Thermalwassers zu der Geothermiequelle (41) und eine erste und eine zweite Zuleitung (421, 422) zur Leitung des erwärmten Wärmetransportmediums von dem Wärmetauscher (42) zu dem Verdampfer (431) und dem Kondensator (433) auf dem gleichen Temperaturniveau ($T_{42}$), wobei der Kondensator (433) zur Bereitstellung der Wärme ($Q_{out}$) an das dem Kondensator (433) zugeführte erwärmte Wärmetransportmedium dient.

10. Anordnung nach Anspruch 9, wobei die Hochtemperaturwärmepumpe (43) eine Hochtemperaturkompressionswärmepumpe (43) ist.

11. Anordnung nach Anspruch 9 oder 10, wobei die Hochtemperaturwärmepumpe (43) ein Arbeitsmittel umfasst, welches aus der Familie der Fluorketone ist.

12. Anordnung nach einem der Ansprüche 9 bis 11, wobei die Hochtemperaturwärmepumpe (43) ein Arbeitsmittel umfasst, dessen kritische Temperatur über 160°C liegt.

13. Anordnung nach einem der Ansprüche 9 bis 12 mit wenigstens einem thermischen Speicher (51, 52), der zur Aufnahme und Speicherung von Wärme ($Q_{in}$) eines ersten Temperaturniveaus ($T_{41}$, $T_{42}$) vom Thermalwasser oder von Wärme ($Q_{out}$) eines zweiten, höheren Temperaturniveaus ($T_{43}$, $T_{47}$) vom Kondensator (433) der Hochtemperaturwärmepumpe (43) ausgestaltet ist.

14. Anordnung nach einem der Ansprüche 9 bis 13 mit mindestens zwei Hochtemperaturwärmepumpen (43) in einer Reihenschaltung.

## Claims

1. Method for providing heat ($Q_{out}$) for a district heating supply (40), comprising the following method steps:

   - extracting thermal water (20) for providing heat at a first temperature level ($T_{41}$, $T_{42}$) from a geothermal source (41),
   - providing and operating a high-temperature heat pump (43),
   - thermally connecting the geothermal source (41) to the high-temperature heat pump (43),
   - conducting the thermal water through a heat exchanger (42) for transmitting heat to a heat transporting medium, whereby a heated heat transporting medium is provided,
   - passing the thermal water cooled in the heat exchanger (42) via a reinjection line (412) back into the geothermal source (41),
   - passing the heated heat transporting medium to the evaporator (431) and the condenser (433) of the high-temperature heat pump (43),
   - the heat transporting medium being passed to the evaporator (431) and the condenser (433) at the same temperature level ($T_{42}$),
   - thermally transmitting heat ($Q_{in}$) of the first temperature level ($T_{41}$, $T_{42}$) from the heated heat transporting medium passed to the evaporator (431) to the evaporator (431) of the high-temperature heat pump (43) and
   - providing heat ($Q_{out}$) at a second, higher temperature level ($T_{43}$, $T_{47}$), which lies at at least 100°C, through the condenser (433) of the high-temperature heat pump (43) to the heated heat transporting medium passed to the condenser (433) .

2. Method according to Claim 1, in which a high-temperature compression heat pump (43) is used as the high-temperature heat pump (43).

3. Method according to Claim 1 or 2, in which the second, higher temperature level ($T_{43}$, $T_{47}$) lies at at least 110°C.

4. Method according to one of the preceding claims, in which a working medium from the family of fluoroketones is used in the high-temperature heat pump (43).

5. Method according to one of the preceding claims, in which a non-toxic working medium is used in the high-temperature heat pump (43).

6. Method according to one of the preceding claims, in which a working medium of which the critical temperature lies above 160°C is used in the high-temperature heat pump (43).

7. Method according to one of the preceding claims, in which at least one thermal store (51, 52) for taking up and storing the heat ($Q_{in}$) of the first temperature level ($T_{41}$, $T_{42}$) from the thermal water or the heat ($Q_{out}$) of the second, higher temperature level ($T_{43}$, $T_{47}$) from the condenser (433) of the high-temperature heat pump (43) is used.

8. Method according to one of the preceding claims, in which at least two high-temperature heat pumps (43) are coupled in a series connection.

9. Arrangement for providing heat ($Q_{out}$) for a district heating network (40) at a temperature level ($T_{43}$, $T_{47}$) of at least 100°C comprising at least one thermal water extraction device (20), a high-temperature heat pump (43) with an evaporator (431) and a condenser (433), a heat exchanger (42) for transmitting heat from the extracted thermal water to a heat transporting medium for providing a heated heat transporting medium, a thermal water transporting line (411) for passing the extracted thermal water to the heat exchanger (42), a reinjection line (412) for passing the thermal water cooled in the heat exchanger (42) back to the geothermal source (41) and a first and a second supply line (421, 422) for conducting the heated heat transporting medium from the heat exchanger (42) to the evaporator (431) and the condenser (433) at the same temperature level ($T_{42}$), the condenser (433) serving for providing the heat ($Q_{out}$) to the heated heat transporting medium passed to the condenser (433).

10. Arrangement according to Claim 9, the high-temperature heat pump (43) being a high-temperature compression heat pump (43) .

11. Arrangement according to Claim 9 or 10, the high-temperature heat pump (43) containing a working medium that is from the family of fluoroketones.

12. Arrangement according to one of Claims 9 to 11, the high-temperature heat pump (43) containing a working medium of which the critical temperature lies above 160°C.

13. Arrangement according to one of Claims 9 to 12 with at least one thermal store (51, 52), which is designed for taking up and storing heat ($Q_{in}$) of a first temperature level ($T_{41}$, $T_{42}$) from the thermal water or heat ($Q_{out}$) of a second, higher temperature level ($T_{43}$, $T_{47}$) from the condenser (433) of the high-temperature heat pump (43).

14. Arrangement according to one of Claims 9 to 13 with at least two high-temperature heat pumps (43) in a series connection.


**Revendications**

1. Procédé pour fournir de la chaleur ($Q_{out}$) à un réseau (40) de chauffage à distance, comprenant les stades de procédé suivants :

    - extraction (20) d'eau thermale d'une source (41) de géothermie pour fournir de la chaleur à un premier niveau ($T_{41}$, $T_{42}$) de température,
    - mise à disposition et en fonctionnement d'une pompe à chaleur (43) à haute température,
    - liaison en technique de chaleur de la source (41) de géothermie à la pompe à chaleur (43) à haute température,
    - envoi de l'eau thermique dans un échangeur de chaleur (42) pour transmettre de la chaleur à un fluide de transport de chaleur, en mettant ainsi à disposition un fluide chauffé de transport de chaleur,
    - retour de l'eau thermique, refroidie dans l'échangeur de chaleur (42), à la source (41) de géothermie par l'intermédiaire d'un conduit (412) de réinjection,
    - envoi du fluide chauffé de transport de chaleur à l'évaporateur (431) et au condenseur (433) de la pompe à chaleur (43) à haute température, le fluide de transport de chaleur étant envoyé, au même niveau ($T_{42}$) de température, à l'évaporateur (431) et au condenseur (433),
    - transfert de chaleur ($Q_{in}$) du premier niveau ($T_{41}$, $T_{42}$) de température, du fluide chauffé de transport de chaleur envoyé à l'évaporateur (431) à l'évaporateur (431) de la pompe à chaleur (43) à haute température et
    - fourniture de chaleur ($Q_{out}$) à un deuxième niveau ($T_{43}$, $T_{47}$) de température plus haut, qui est d'au moins 100°C, par le condenseur (433) de la pompe à chaleur (43 ) à haute température au fluide chauffé de transport de chaleur envoyé au condenseur (433).

2. Procédé suivant la revendication 1, dans lequel on utilise une pompe à chaleur (43) à compression à haute température comme pompe à chaleur (43) à haute température.

3. Procédé suivant la revendication 1 ou 2, dans lequel le deuxième niveau ($T_{43}$, $T_{47}$) de température plus haut est à au moins 110°C.

4. Procédé suivant l'une des revendications précédentes, dans lequel on introduit, dans la pompe à chaleur (43) à haute température, un fluide de travail de la famille des fluorocétones.

5. Procédé suivant l'une des revendications précédentes, dans lequel on introduit, dans la pompe à chaleur (43) à haute température, un fluide de travail non toxique.

6. Procédé suivant l'une des revendications précédentes, dans lequel on introduit, dans la pompe à chaleur (43) à haute température, un fluide de travail, dont la température critique est supérieure à 160°C.

7. Procédé suivant l'une des revendications précédentes, dans lequel on utilise un accumulateur (51, 52) thermique pour absorber et accumuler la chaleur ($Q_{in}$), du premier niveau ($T_{41}$, $T_{42}$) de température, de l'eau thermale ou de la chaleur ($Q_{out}$), du deuxième niveau ($T_{43}$, $T_{47}$) de température plus haut, du condenseur (433) de la pompe à chaleur (43) à haute température.

8. Procédé suivant l'une des revendications précédentes, dans lequel on couple, suivant un montage en série, au moins deux pompes à chaleur (43) à haute température.

9. Système pour fournir de la chaleur ($Q_{out}$) à un réseau (40) de chauffage à distance à un niveau ($T_{43}$, $T_{47}$) de température d'au moins 100°C comprenant au moins un dispositif (20) d'extraction d'eau thermale, une pompe à chaleur (43) à haute température ayant un évaporateur (431) et un condenseur (433), un échangeur de chaleur (42) pour transmettre de la chaleur de l'eau thermale extraite à un fluide de transport de chaleur pour mettre à disposition un fluide de transport de chaleur chauffé, un conduit (411) de transport d'eau thermale pour envoyer l'eau thermale extraite à l'échangeur de chaleur (42), un conduit (412) de réinjection pour renvoyer l'eau thermale, refroidie dans l'échangeur de chaleur (42), à la source (41) de géothermie et un premier et un deuxième conduits (421, 422) d'envoi pour envoyer le fluide de transport de chaleur chauffé de l'échangeur de chaleur (42) à l'évaporateur (431) et au condenseur (433) au même niveau ($T_{42}$) de température, le condenseur (433) servant à fournir la chaleur ($Q_{out}$) au fluide de transport de chaleur chauffé envoyé au condenseur (433).

10. Système suivant la revendication 9, dans lequel la pompe à chaleur (43) à haute température est une pompe à chaleur (43) à compression à haute température.

11. Système suivant la revendication 9 ou 10, dans lequel la pompe à chaleur (43) à haute température comprend un fluide de travail de la famille des fluorocétones.

12. Système suivant l'une des revendications 9 à 11, dans lequel la pompe à chaleur (43) à haute température comprend un fluide de travail, dont la température critique est supérieure à 160°C.

13. Système suivant l'une des revendications 9 à 12, comprenant au moins un accumulateur (51, 52) thermique, qui est conformé pour absorber et accumuler de la chaleur ($Q_{in}$), d'un premier niveau ($T_{41}$, $T_{42}$) de température, de l'eau thermale ou de la chaleur ($Q_{out}$), d'un deuxième niveau ($T_{43}$, $T_{47}$) de température plus haut, du condenseur (433) de la pompe à chaleur (43) à haute température.

14. Système suivant l'une des revendications 9 à 13, comprenant au moins deux pompes à chaleur (43) à haute température suivant un montage en série.

FIG 1

EP 2 994 699 B1

FIG 2
(Stand der Technik)

# FIG 3
(Stand der Technik)

## FIG 4

# FIG 5

## FIG 6

## FIG 7

FIG 8

FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2298768 A1